# EUROPEAN PATENT APPLICATION

(11) **EP 4 563 854 A1**
(43) Date of publication of application: **04.06.2025**
(21) Application number: 24203527.7
(22) Date of filing: 30.09.2024
(51) Int. Cl.: F16K 11/22, B60K 11/02, F16K 27/02, H01M 10/6556, H01M 10/6567

(54) **VALVE ASSEMBLY, TEMPERATURE ADJUSTING APPARATUS, BATTERY TRAY, BATTERY PACK, AND POWER CONSUMING DEVICE**

(30) Priority: 28.11.2023 CN 202323237747 U; 04.02.2024 CN 202420271821 U
(71) Applicant: BYD Company Limited, Shenzhen, Guangdong 518118 (CN)
(72) Inventor: Yue, Qianli, Shenzhen, 518118 (CN); Zhong, Rijun, Shenzhen, 518118 (CN); Dong, Zhen, Shenzhen, 518118 (CN); Cai, Yaomin, Shenzhen, 518118 (CN); Liu, Zhuoran, Shenzhen, 518118 (CN)
(74) Representative: Mathys & Squire

(57) **Abstract**

The present disclosure discloses a valve assembly, a temperature adjusting apparatus, a battery tray, a battery pack, and a power consuming device. The valve assembly includes: a valve body and an adjusting component. The valve body is provided with a first fluid conducting orifice and a second fluid conducting orifice. The first fluid conducting orifice is configured to communicate a flow channel inlet of a temperature adjusting member with an outside, and the second fluid conducting orifice is configured to communicate a flow channel outlet of the temperature adjusting member with the outside. The adjusting component is arranged on the valve body and configured to adjust a flow rate of the first fluid conducting orifice and a flow rate of the second fluid conducting orifice. The valve assembly designed according to the present disclosure can be configured to adjust a flow rate of a cooling medium entering the temperature adjusting member and adjust a flow rate of the cooling medium flowing out of the temperature adjusting member. The valve assembly has rich functions and is arranged more flexibly. The valve assembly can be arranged according to actual needs to achieve richer temperature adjusting effects.

## Description

### CROSS-REFERENCE TO RELATED APPLICATIONS

The present disclosure claims priority to and benefits of Chinese Patent Application No. 2023232377472, entitled "VALVE ASSEMBLY, TEMPERATURE ADJUSTING APPARATUS, BATTERY TRAY, BATTERY PACK, AND POWER CONSUMING DEVICE" filed on November 28, 2023. The entire content of the above-referenced application is incorporated herein by reference.

### FIELD

The present disclosure relates to the technical field of batteries, and more specifically, to a valve assembly, a temperature adjusting apparatus, a battery tray, a battery pack, and a power consuming device.

### BACKGROUND

In related arts, valves have single functions and cannot achieve richer adjusting functions.

### SUMMARY

The present disclosure aims to solve at least one of the technical problems in the related art. Therefore, an objective of the present disclosure is to provide a valve assembly. The valve assembly designed according to the present disclosure can be configured to adjust a flow rate of a cooling medium entering the temperature adjusting member and adjust a flow rate of the cooling medium flowing out of the temperature adjusting member. The valve assembly has various functions and is arranged more flexibly. The valve assembly can be arranged according to actual needs to achieve richer temperature adjusting effects.

The present disclosure further provides a temperature adjusting apparatus with the above valve assembly.

The present disclosure further provides a battery tray with the above temperature adjusting apparatus.

The present disclosure further provides a battery pack with the above battery tray.

The present disclosure further provides a power consuming device with the above battery pack.

The valve assembly according to the present disclosure includes: a valve body and an adjusting component. The valve body is provided with a first fluid conducting orifice and a second fluid conducting orifice. The first fluid conducting orifice is configured to communicate a flow channel inlet of a temperature adjusting member with an outside, and the second fluid conducting orifice is configured to communicate a flow channel outlet of the temperature adjusting member with the outside. The adjusting component is arranged on the valve body and configured to adjust a flow rate of the first fluid conducting orifice and a flow rate of the second fluid conducting orifice.

According to the valve assembly of the present disclosure, the valve body is provided with the first fluid conducting orifice and the second fluid conducting orifice. The first fluid conducting orifice is configured to communicate the flow channel inlet of the temperature adjusting member with the outside, and the second fluid conducting orifice is configured to communicate the flow channel outlet of the temperature adjusting member with the outside. The valve assembly of the present disclosure is provided with the adjusting component, and the adjusting component can be configured to adjust the flow rate of the cooling medium entering the temperature adjusting member and adjust the flow rate of the cooling medium flowing out of the temperature adjusting member. The functions of the valve assembly are enriched, and the valve assembly is arranged more flexibly. The valve assembly can be arranged according to the needs of the temperature adjusting member to achieve richer temperature adjusting effects.

According to some embodiments of the present disclosure, the adjusting component includes a first adjusting member and a second adjusting member. The first adjusting member is configured to adjust the flow rate of the first fluid conducting orifice, and the second adjusting member is configured to adjust the flow rate of the second fluid conducting orifice.

According to some embodiments of the present disclosure, the valve body is provided with a main inlet and a main outlet for communicating with the outside. A first valve channel and a second valve channel are arranged spaced away in the valve body. The first fluid conducting orifice communicates with the main inlet through the first valve channel, and the second fluid conducting orifice communicates with the main outlet through the second valve channel.

According to some embodiments of the present disclosure, the first valve channel includes: a first main channel and multiple first sub-channels communicating with the first main channel, multiple first fluid conducting orifices and multiple first adjusting members are provided, the first fluid conducting orifice is configured to communicate with the corresponding flow channel inlet of the temperature adjusting member, the first fluid conducting orifice communicates with the first main channel through the corresponding first sub-channel, and the first adjusting member is configured to adjust the flow rate of the corresponding first fluid conducting orifice; and/or the second valve channel includes: a second main channel and multiple second sub-channels communicating with the second main channel, multiple second fluid conducting orifices and multiple second adjusting members are provided, the second fluid conducting orifice is configured to communicate with the corresponding flow channel outlet of the temperature adjusting member, the second fluid conducting orifice communicates with the second main channel through the corresponding second sub-channel, and the second adjusting member is configured to adjust the flow rate of the corresponding second fluid conducting orifice.

According to some embodiments of the present disclosure, the multiple first fluid conducting orifices and the multiple first adjusting members are provided, and the multiple second fluid conducting orifices and the multiple second adjusting members are provided. The multiple first fluid conducting orifices and the multiple second fluid conducting orifices are located on one side of the valve body, and the multiple first fluid conducting orifices form a first fluid conducting orifice group. The multiple first adjusting members and the multiple second adjusting members are located on another side of the valve body, and the multiple second fluid conducting orifices form a second fluid conducting orifice group. The multiple first fluid conducting orifices in the first fluid conducting orifice group are arranged spaced away along a width direction of the valve body, the multiple first fluid conducting orifices in the second fluid conducting orifice group are arranged spaced away along the width direction of the valve body, and the second fluid conducting orifice group is located on one side of the first fluid conducting orifice group along the width direction of the valve body.

According to some embodiments of the present disclosure, the main inlet and the main outlet are arranged at a same end of the valve body.

According to some embodiments of the present disclosure, the first adjusting member is configured to adjust an opening area of the first fluid conducting orifice, and/or the second adjusting member is configured to adjust an opening area of the second fluid conducting orifice.

According to some embodiments of the present disclosure, a main inlet channel communicating with the main inlet is formed on the valve body, and multiple first valve channels are provided and respectively communicate with the main inlet channel; and a main outlet channel communicating with the main outlet is formed on the valve body, and multiple second valve channels are provided and respectively communicate with the main outlet channel.

According to some embodiments of the present disclosure, the first adjusting member includes: a first driving portion and a first transmission member, the first driving portion is arranged on the valve body, the first transmission member is connected with the first driving portion, and the first driving portion is configured to drive the first transmission member to move so as to enable the first transmission member to be close to or away from the first fluid conducting orifice; and/or the second adjusting member includes: a second driving portion and a second transmission member, the second driving portion is arranged on the valve body, the second transmission member is connected with the second driving portion, and the second driving portion is configured to drive the second transmission member to move so as to enable the second transmission member to be close to or away from the second fluid conducting orifice.

According to some embodiments of the present disclosure, a size of an end of the first transmission member facing the first fluid conducting orifice gradually decreases in a direction away from the first driving portion; and/or a size of an end of the second transmission member facing the second fluid conducting orifice gradually decreases in a direction away from the second driving portion.

According to some embodiments of the present disclosure, the first transmission member is movably arranged on the valve body and at least partially located in the first valve channel; and/or the second transmission member is movably arranged on the valve body and at least partially located in the second valve channel.

A temperature adjusting apparatus according to embodiments of a second aspect of the present disclosure is briefly described below.

The temperature adjusting apparatus according to the present disclosure includes a temperature adjusting member and a valve assembly. A flow channel is formed in the temperature adjusting member, and the flow channel is provided with a flow channel inlet and a flow channel outlet. The valve assembly is arranged on the temperature adjusting member. The valve assembly is constructed as the valve assembly according to any one of the above embodiments. The first fluid conducting orifice communicates with the flow channel inlet, and the second fluid conducting orifice communicates with the flow channel outlet. Because the temperature adjusting apparatus according to the present disclosure is provided with the valve assembly in the above embodiments, the temperature adjusting apparatus can efficiently adjust the temperature.

According to some embodiments of the present disclosure, multiple flow channels are provided. Multiple first fluid conducting orifices and multiple second fluid conducting orifices are provided. The first fluid conducting orifice communicates with the corresponding flow channel inlet, and the second fluid conducting orifice communicates with the corresponding flow channel outlet. The adjusting component is configured to adjust flow rates of the multiple first fluid conducting orifices and the multiple second fluid conducting orifices.

According to some embodiments of the present disclosure, the adjusting component includes multiple first adjusting members and multiple second adjusting members. The first adjusting member is configured to adjust the flow rate of the corresponding first fluid conducting orifice, and the second adjusting member is configured to adjust the flow rate of the corresponding second fluid conducting orifice.

According to some embodiments of the present disclosure, the temperature adjusting member is formed with a first flow channel and a second flow channel. The first flow channel is arranged around a periphery of the second flow channel. The first flow channel is configured to exchange heat with a first temperature region of a battery module, and the second flow channel is configured to exchange heat with a second temperature region of the battery module.

According to some embodiments of the present disclosure, the first flow channel is formed with a protrusion portion protruding towards an inside of the second flow channel, and the second flow channel is formed with a notch portion matched with the protrusion portion.

According to some embodiments of the present disclosure, the first flow channel includes multiple first sub-flow channels connected in parallel with each other, and the second flow channel includes multiple second sub-flow channels connected in parallel with each other.

A battery tray according to embodiments of a third aspect of the present disclosure is briefly described below.

The battery tray according to the present disclosure includes: a temperature adjusting apparatus and a side plate. The temperature adjusting apparatus is constructed as the temperature adjusting apparatus according to any one of the above embodiments. The side plate is arranged on a periphery of the temperature adjusting member, and an accommodating cavity suitable for accommodating a battery module is defined between the side plate and the temperature adjusting member. A valve assembly is at least partially arranged in the accommodating cavity. Because the battery tray according to the present disclosure is provided with the temperature adjusting apparatus in the above embodiments, the battery tray can efficiently control the temperature of a battery.

According to some embodiments of the present disclosure, a receiving space is formed on the side plate, and the valve body is at least partially received in the receiving space.

A battery pack according to embodiments of a fourth aspect of the present disclosure is briefly described below.

The battery pack according to the present disclosure includes: the temperature adjusting apparatus according to any one of the above embodiments, or the battery tray according to any one of the above embodiments; and a battery module. The battery module includes at least one battery, and the temperature adjusting apparatus is configured to exchange heat for the battery module. Because the battery pack according to the present disclosure is provided with the temperature adjusting apparatus in the above embodiments, the battery pack can accurately control the state and flow rate of a heat exchange medium in each flow channel to improve the temperature adjusting effect at various locations of the battery pack.

According to some embodiments of the present disclosure, the battery module has a first temperature region and a second temperature region. A first flow channel of the temperature adjusting member is configured to exchange heat for the first temperature region of the battery module, and a second flow channel of the temperature adjusting member is configured to exchange heat for the second temperature region of the battery module.

According to some embodiments of the present disclosure, the battery module includes multiple batteries arranged along a first direction and extending along a second direction, and at least one end of each battery is provided with an electrode lead-out terminal. The temperature adjusting member is arranged on one side of the battery module along a third direction. The first temperature region is a region of the battery module close to the electrode lead-out terminal. The second flow channel of the temperature adjusting member is arranged on one side of the first flow channel away from the electrode lead-out terminal.

A power consuming device according to embodiments of a fifth aspect of the present disclosure is briefly described below.

The power consuming device according to the present disclosure includes the battery pack according to any one of the above embodiments. Because the power consuming device according to the present disclosure is provided with the battery pack in the above embodiments, the power consuming device has better safety.

Additional aspects and advantages of the present disclosure are partially provided in the following description, and partially become apparent in the following description, or are understood through the practice of the present disclosure.

### BRIEF DESCRIPTION OF THE DRAWINGS

The above and/or additional aspects and advantages of the present disclosure will become apparent and comprehensible in the description of embodiments with reference to the following accompanying drawings, where
FIG. 1 is an overall structural view of a battery tray according to an embodiment of the present disclosure;
FIG. 2 is a lateral view of a battery tray according to an embodiment of the present disclosure;
FIG. 3 is a structural view of a side plate according to an embodiment of the present disclosure;
FIG. 4 is a top view of a temperature adjusting member according to an embodiment of the present disclosure;
FIG. 5 is a schematic structural view of a battery according to an embodiment of the present disclosure;
FIG. 6 is a schematic view of a first flow channel according to an embodiment of the present disclosure;
FIG. 7 is a schematic view of a first flow channel corresponding to a battery according to an embodiment of the present disclosure;
FIG. 8 is a schematic view of a second flow channel according to an embodiment of the present disclosure;
FIG. 9 is a schematic view of a second flow channel corresponding to a battery according to an embodiment of the present disclosure;
FIG. 10 is a structural view of a valve assembly according to an embodiment of the present disclosure;
FIG. 11 is a structural view of a valve assembly according to an embodiment of the present disclosure;
FIG. 12 is a schematic view of flow channels inside a valve assembly according to an embodiment of the present disclosure;
FIG. 13 is a structural view of a portion of a valve assembly according to an embodiment of the present disclosure;
FIG. 14 is a cross-sectional view of a portion of a valve assembly according to an embodiment of the present disclosure; and
FIG. 15 is a cross-sectional view of a portion of a valve assembly according to an embodiment of the present disclosure; and

In the drawings:
1. battery tray;
11. temperature adjusting member; 11a. flow channel inlet; 11b. flow channel outlet; 111. first flow channel; 1111. protrusion portion; 112. second flow channel; 1121. notch portion;
100. valve assembly;
12. valve body; 12a. main inlet; 12b. main outlet; 12c. main inlet channel; 12d. main outlet channel; 121. first side wall; 121a. first through hole; 121b. second through hole; 122. second side wall;
123. first sub-channel; 123a. first fluid conducting orifice; 123b. first valve channel outlet; 123c. first sub-valve port; 123d. second sub-valve port; 1231. first main channel;
124. second sub-channel; 124a. second valve channel inlet; 124b. second fluid conducting orifice; 124c. third sub-valve port; 124d. fourth sub-valve port; 1241. second main channel;
130. slope;
131. first adjusting member; 1311. first driving portion; 1312. first transmission member; 1313. first sealing portion;
132. second adjusting member; 1321. second driving portion; 1322. second transmission member; 1323. second sealing portion;
20. side plate; 20b. receiving space;
2. battery; 2a. electrode lead-out terminal; and 2b. battery middle section.

### DETAILED DESCRIPTION

Embodiments of the present disclosure are described in detail below, and examples of the embodiments are shown in accompanying drawings, where the same or similar elements or elements having same or similar functions are denoted by the same or similar reference numerals throughout the description. The following embodiments described with reference to the accompanying drawings are exemplary, and are only intended to explain the present disclosure and cannot be construed as a limitation to the present disclosure.

In the description of the present disclosure, it should be understood that orientation or position relationships indicated by terms such as "center", "longitudinal", "transverse", "length", "width", "thickness", "above", "below", "front", "back", "left", "right", "vertical", "horizontal", "top", "bottom", "inside", "outside", "clockwise", and "anticlockwise" are based on orientation or position relationships shown in the accompanying drawings, and are intended to facilitate the description of the present disclosure and simplify the description only, rather than indicating or implying that the apparatus or element referred to must have a particular orientation or be constructed and operated in a particular orientation, and therefore cannot be construed as a limitation to the present disclosure.

In addition, terms "first" and "second" are used merely for the purpose of description, and shall not be construed as indicating or implying relative importance or implicitly indicating a quantity of indicated technical features. Therefore, a feature limited by "first" or "second" may explicitly or implicitly include one or more of the features. In the descriptions of the present disclosure, unless otherwise explicitly and specifically defined, "multiple" means at least two, for example, two or three.

In the present disclosure, unless otherwise explicitly specified and defined, terms "mount", "connect", "connection", and "fix" should be understood in a broad sense. For example, a connection may be a fixed connection, a detachable connection, or an integral connection; or the connection may be a mechanical connection, an electrical connection, or mutual communication; or the connection may be a direct connection, an indirect connection through an intermediate medium, internal communication between two elements, or an interaction relationship between two elements. A person of ordinary skill in the art can understand specific meanings of the above terms in the present disclosure according to specific situations.

In the present disclosure, unless otherwise explicitly specified and defined, a first feature being "above" or "below" a second feature may include the first and second features being in direct contact, or may include the first and second features being not in direct contact but in contact by other features therebetween. In addition, the first feature being "on", "above", or "over" the second feature includes the first feature being right above or at the inclined top of the second feature, or merely indicates a level of the first feature being higher than that of the second feature. The first feature being "below", "under", or "beneath" the second feature includes the first feature being right below or at the inclined bottom of the second feature, or merely indicates a level of the first feature being lower than that of the second feature.

In related arts, valves have single functions and cannot achieve richer adjusting functions.

A valve assembly 100 according to the present disclosure is described below according to the accompanying drawings.

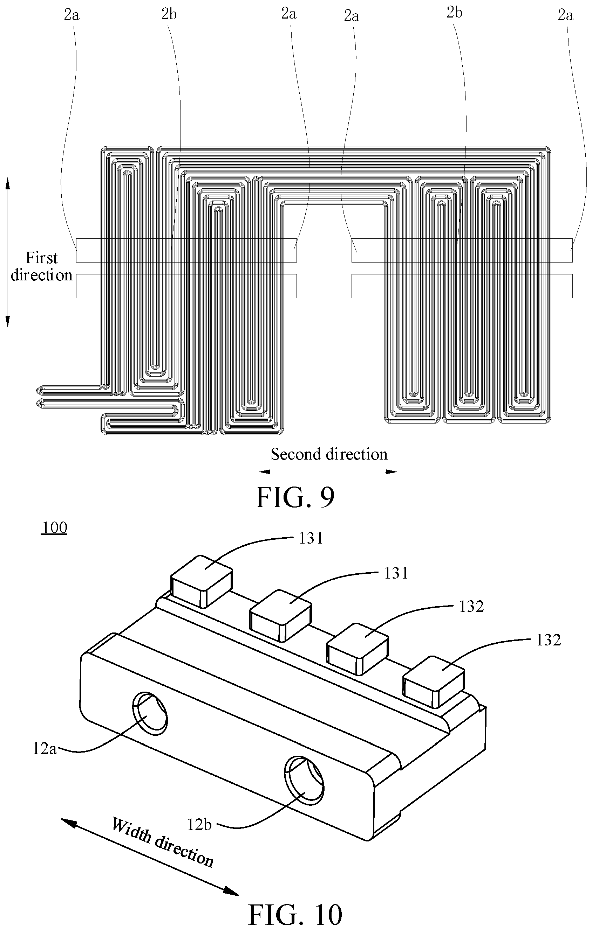

As shown in FIG. 10 to FIG. 15, the valve assembly 100 according to the present disclosure includes: a valve body 12 and an adjusting component. A valve channel for circulation of a medium may be arranged inside the valve body 12. The valve channel is provided with a first fluid conducting orifice 123a and a second fluid conducting orifice 124b. The first fluid conducting orifice 123a is configured to communicate a flow channel inlet 11a of a temperature adjusting member 11 with an outside, and the second fluid conducting orifice 124b is configured to communicate a flow channel outlet 11b of the temperature adjusting member 11 with the outside. Here, it should be noted that the outside may be a water pump, an air conditioner, a radiator, etc.

In the present disclosure, an objective of the valve assembly 100 is to control flow rates of the inlet and outlet of the temperature adjusting member 11. The first fluid conducting orifice 123a can guide a cooling medium passing through a radiator or an air conditioner from the outside into a flow channel of a temperature adjusting apparatus, and the adjusting component can control a flow rate of the cooling medium entering the flow channel. The second fluid conducting orifice 124b can guide the cooling medium out of the flow channel. The second fluid conducting orifice 124b can communicate with an external water pump to guide the cooling medium out of the flow channel, and the adjusting component can control a flow rate of the cooling medium guided out of the flow channel.

The adjusting component arranged in the valve assembly 100 is arranged on the valve body 12. The valve assembly 100 is configured to adjust flow rates of the first fluid conducting orifice 123a and the second fluid conducting orifice 124b, thereby controlling the flow rate of the cooling medium entering and guided out of the temperature adjusting apparatus to achieve the control of the radiating efficiency or temperature in different regions in the temperature adjusting apparatus.

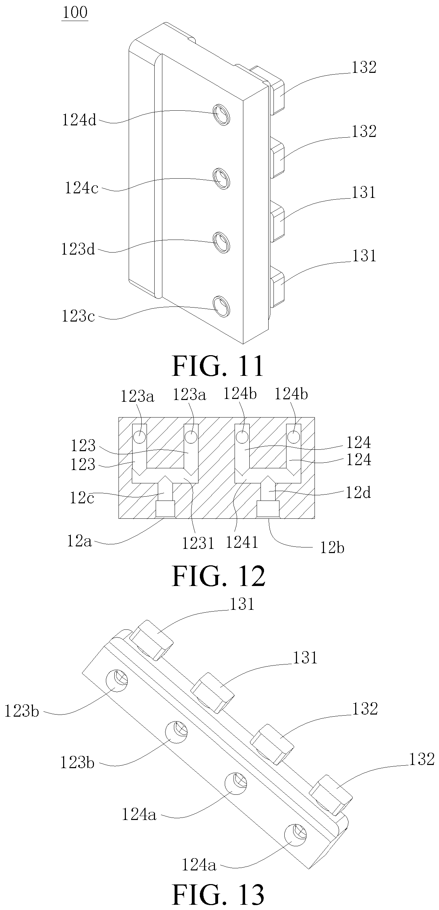

In some embodiments of the present disclosure, as shown in FIG. 11, the adjusting component may be arranged at the first fluid conducting orifice 123a or the second fluid conducting orifice 124b. The control of the flow rate in the valve body 12 can be achieved by controlling opening areas of the first fluid conducting orifice 123a and the second fluid conducting orifice 124b. Of course, movement may also be implemented in the valve body 12. The flow rates of the first fluid conducting orifice 123a and the second fluid conducting orifice 124b can be controlled by changing a cross-sectional area of the flow channel in the valve body 12.

In some other embodiments of the present disclosure, the adjusting component may be constructed as a turbulence member extending into the inside of the valve body 12. The control of the flow rates of the first fluid conducting orifice 123a and the second fluid conducting orifice 124b can be achieved by arranging the turbulence member. For example, a volume of the turbulence member extending into the inside of the valve body 12 is increased, thereby reducing a cross-sectional area of the valve channel to increase the flow rate of the first fluid conducting orifice 123a or the second fluid conducting orifice 124b; or the volume of the turbulence member extending into the inside of the valve body 12 is reduced, thereby increasing the cross-sectional area of the valve channel to reduce the flow rate of the first fluid conducting orifice 123a or the second fluid conducting orifice 124b.

According to the valve assembly 100 of the present disclosure, the valve body 12 is provided with the first fluid conducting orifice 123a and the second fluid conducting orifice 124b. The first fluid conducting orifice 123a is configured to communicate the flow channel inlet 11a of the temperature adjusting member 11 with the outside, and the second fluid conducting orifice 124b is configured to communicate the flow channel outlet 11b of the temperature adjusting member 11 with the outside. The valve assembly 100 of the present disclosure is provided with the adjusting component, and the adjusting component can be configured to adjust the flow rate of the cooling medium entering the temperature adjusting member 11 and adjust the flow rate of the cooling medium flowing out of the temperature adjusting member 11. The functions of the valve assembly 100 are enriched, and the valve assembly 100 is arranged more flexibly. The valve assembly 100 can be arranged according to the needs of the temperature adjusting member 11 to achieve richer temperature adjusting effects.

According to an embodiment of the present disclosure, as shown in FIG. 10 to FIG. 15, the adjusting component includes a first adjusting member 131 and a second adjusting member 132. The first adjusting member 131 is configured to adjust the flow rate of the first fluid conducting orifice 123a, and the second adjusting member 132 is configured to adjust the flow rate of the second fluid conducting orifice 124b. By arranging the first adjusting member 131 and the second adjusting member 132, the flow rates entering the temperature adjusting member 11 and flowing out of the temperature adjusting member 11 can be adjusted respectively, thereby achieving the independent control of the first fluid conducting orifice 123a and the second fluid conducting orifice 124b, and improving the flexibility of the valve assembly 100. When applied to the temperature adjusting member 11, the flow rate of the cooling medium entering the temperature adjusting member 11 and the flow rate of the cooling medium guided out of the temperature adjusting member 11 can be controlled respectively.

According to an embodiment of the present disclosure, multiple first fluid conducting orifices are provided and are sequentially arranged in a width direction of the valve body 12, and multiple second fluid conducting orifices are provided and are sequentially arranged in the width direction of the valve body 12.

According to an embodiment of the present disclosure, multiple adjusting components are provided. Each first fluid conducting orifice and each second fluid conducting orifice are respectively arranged corresponding to one adjusting component, and each adjusting component is configured to adjust the opening area of the corresponding first fluid conducting orifice or adjust the opening area of the corresponding second fluid conducting orifice.

According to an embodiment of the present disclosure, a main inlet channel communicating with a main inlet is formed on the valve body 12, and multiple first valve channels are provided and respectively communicate with the main inlet channel; and a main outlet channel communicating with a main outlet is formed on the valve body 12, and multiple second valve channels are provided and respectively communicate with the main outlet channel.

According to an embodiment of the present disclosure, as shown in FIG. 10 to FIG. 15, the valve body 12 is provided with a main inlet 12a and a main outlet 12b for communicating with the outside. A first valve channel and a second valve channel are arranged spaced away in the valve body 12. The first fluid conducting orifice 123a communicates with the main inlet 12a through the first valve channel, and the second fluid conducting orifice 124b communicates with the main outlet 12b through the second valve channel. The first valve channel and the second valve channel are arranged spaced away to divide a space in the valve body 12, so that the cooling medium entering the valve body 12 and the cooling medium guided out of the valve body 12 are respectively located in different spaces to reduce heat exchange between the two cooling media in different flow directions.

In some embodiments, a partition plate is arranged in the valve body 12. The partition plate divides the inside of the valve body 12 into the first valve channel and the second valve channel, and the partition plate can be constructed as a heat insulation member.

According to an embodiment of the present disclosure, as shown in FIG. 12, the first valve channel includes a first main channel 1231 and multiple first sub-channels 123 communicating with the first main channel 1231, multiple first fluid conducting orifices 123a and first adjusting members 131 are provided, the first fluid conducting orifice 123a is configured to communicate with the corresponding flow channel inlet 11a of the temperature adjusting member 11, the first fluid conducting orifice 123a communicates with the first main channel 1231 through the corresponding first sub-channel 123, and the first adjusting member 131 is configured to adjust the flow rate of the corresponding first fluid conducting orifice 123a; and/or the second valve channel includes a second main channel 1241 and multiple second sub-channels 124 communicating with the second main channel 1241, multiple second fluid conducting orifices 124b and second adjusting members 132 are provided, the second fluid conducting orifice 124b is configured to communicate with the corresponding flow channel outlet 11b of the temperature adjusting member 11, the second fluid conducting orifice 124b communicates with the second main channel 1241 through the corresponding second sub-channel 124, and the second adjusting member 132 is configured to adjust the flow rate of the corresponding second fluid conducting orifice 124b.

In the above embodiments, the multiple first sub-channels 123 and the multiple second sub-channels 124 are provided. The multiple first sub-channels 123 can be configured to divert the cooling medium entering the temperature adjusting member 11, and the multiple second sub-channels 124 can be configured to divert the cooling medium guided out of the temperature adjusting member 11. Each first sub-channel 123 may correspond to one or more flow channels to achieve supply of the cooling medium to the flow channels in different regions, and each second sub-channel 124 may correspond to one or more flow channels to achieve recovery of the cooling medium in the flow channels in different regions, so that the flow channels in different regions in the temperature adjusting member 11 have independent inlets and outlets.

Further, each first sub-channel 123 is provided with a first adjusting member 131 to independently control the flow rate of the cooling medium entering the first sub-channel 123, thereby regulating heat exchange effects of different regions in the temperature adjusting member 11. Each second sub-channel 124 is provided with a second adjusting member 132 to independently control the flow rate of the cooling medium guided out of the second sub-channel 124, thereby regulating heat exchange effects of different regions in the temperature adjusting member 11.

In the present disclosure, the integration of the valve assembly 100 is achieved by providing the multiple first sub-channels 123 and the multiple second sub-channels 124. The flow rates of multiple different flow channels can be controlled by one valve assembly 100, especially that the flow rates entering the flow channel and guided out of the flow channel can be independently controlled.

According to an embodiment of the present disclosure, as shown in FIG. 10 to FIG. 15, multiple first fluid conducting orifices 123a and first adjusting members 131 are provided, and multiple second fluid conducting orifices 124b and second adjusting members 132 are provided. The multiple first fluid conducting orifices 123a and the multiple second fluid conducting orifices 124b are located on one side of the valve body 12, and the multiple first fluid conducting orifices 123a form a first fluid conducting orifice group. The multiple first adjusting members 131 and the multiple second adjusting members 132 are located on another side of the valve body 12, and the multiple second fluid conducting orifices 124b form a second fluid conducting orifice group. The multiple first fluid conducting orifices 123a in the first fluid conducting orifice group are arranged spaced away along a width direction of the valve body 12, the multiple first fluid conducting orifices 124b in the second fluid conducting orifice group are arranged spaced away along the width direction of the valve body 12, and the second fluid conducting orifice group is located on one side of the first fluid conducting orifice group along the width direction of the valve body 12.

It can be understood that for the convenience of the arrangement of the first adjusting members 131 and the second adjusting members 132, the first adjusting members 131 and the second adjusting members 132 can be arranged in parallel on another side of the valve body 12 to facilitate the overall installation of the valve assembly 100. The multiple first fluid conducting orifices 123a and multiple second fluid conducting orifices 124b arranged on the valve body 12 are located on one side of the valve body 12, and the first fluid conducting orifices 123a and the first adjusting members 131 are located on different surfaces of the valve body 12 to avoid excessive concentration of the first fluid conducting orifices 123a and the first adjusting members 131, thereby being favorable for reducing the volume of the valve body 12 and increasing the integration level of the valve assembly 100. Similarly, the second fluid conducting orifices 124b and the second adjusting members 132 are located on different surfaces of the valve body 12 to avoid excessive concentration of the second fluid conducting orifices 124b and the second adjusting members 132, thereby being favorable for reducing the volume of the valve body 12 and increasing the integration level of the valve assembly 100.

In some specific embodiments, as shown in FIG. 10 to FIG. 15, the first fluid conducting orifices 123a and the first adjusting members 131 are located on two sides in a thickness direction of the valve body 12, and the second fluid conducting orifices 124b and the second adjusting members 132 are located on the two sides in the thickness direction of the valve body 12.

In addition, the multiple first fluid conducting orifices 123a form the first fluid conducting orifice group and are arranged spaced away in the width direction of the valve body 12, thereby facilitating the installation of the first fluid conducting orifices 123a, and affecting the arrangement mode and installation process of the flow channels in the temperature adjusting apparatus. By installing the multiple first fluid conducting orifices 123a concentratedly in a same region to form the first fluid conducting orifice group, the installation process can be simplified, the installation difficulty can be reduced, and the installation process can be optimized. Similarly, the multiple second fluid conducting orifices 124b form the second fluid conducting orifice group and are arranged spaced away in the width direction of the valve body 12, thereby facilitating the installation of the second fluid conducting orifices 124b, and affecting the arrangement mode and installation process of the flow channels in the temperature adjusting apparatus. By installing the multiple second fluid conducting orifices 124b concentratedly in a same region to form the second fluid conducting orifice group, the installation process can be simplified, the installation difficulty can be reduced, and the installation process can be optimized.

In some embodiments, as shown in FIG. 10 to FIG. 15, the first fluid conducting orifice group and the second fluid conducting orifice group are sequentially arranged in the width direction of the valve body 12.

According to some embodiments of the present disclosure, as shown in FIG. 10, the main inlet 12a and the main outlet 12b are arranged at a same end of the valve body 12, that is, the main inlet 12a and the main outlet 12b are arranged on a same side in the width direction of the valve body 12, thereby facilitating the connection between the valve body 12 and external components, reducing the installation difficulty, making the structure of the valve body 12 more compact, avoiding the occupation of spaces of other portions of a vehicle, providing a better arrangement environment for the installation of other components such as a battery 2 of the vehicle, and helping to improve the energy density of a battery pack using the valve assembly 100.

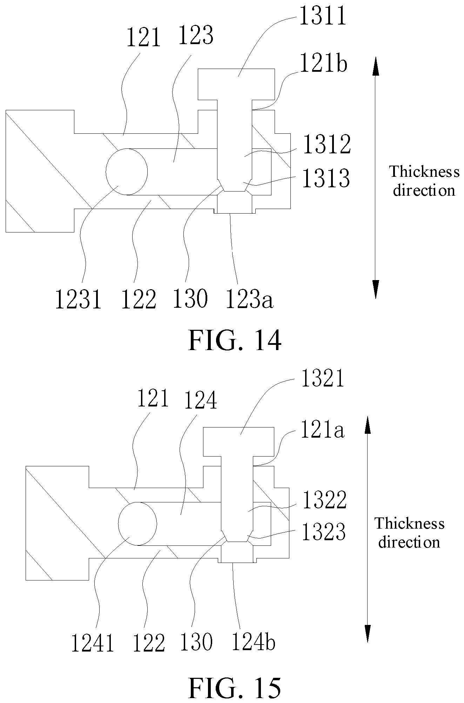

In some embodiments, as shown in FIG. 14, the first adjusting member 131 includes a first driving portion 1311 and a first transmission member 1312. The first driving portion 1311 is arranged on the valve body 12, the first transmission member 1312 is connected with the first driving portion 1311, and the first driving portion 1311 is configured to drive the first transmission member 1312 to move so as to enable the first transmission member 1312 to be close to or away from the first fluid conducting orifice 123a. The first adjusting member 131 may be an electromagnetic valve. The first driving portion 1311 drives the first transmission member 1312 to move to change a gap between an end of the first transmission member 1312 and the first fluid conducting orifice 123a, thereby achieving the adjustment of the flow rate of the first fluid conducting orifice 123a.

In some embodiments, as shown in FIG. 15, the second adjusting member 132 includes a second driving portion 1321 and a second transmission member 1322. The second driving portion 1321 is arranged on the valve body 12, the second transmission member 1322 is connected with the second driving portion 1321, and the second driving portion 1321 is configured to drive the second transmission member 1322 to move so as to enable the second transmission member 1322 to be close to or away from the second fluid conducting orifice 124b. The second adjusting member 132 may be an electromagnetic valve. The second driving portion 1321 drives the second transmission member 1322 to move to change a gap between an end of the second transmission member 1322 and the second fluid conducting orifice 124b, thereby achieving the adjustment of the flow rate of the second fluid conducting orifice 124b.

In some embodiments, the size of an end of the first transmission member 1312 facing the first fluid conducting orifice 123a gradually decreases in a direction away from the first driving portion 1311; and/or the size of an end of the second transmission member 1322 facing the second fluid conducting orifice 124b gradually decreases in a direction away from the second driving portion 1321. The cross-sectional shape of the first transmission member 1312 is adapted to the shape of the first fluid conducting orifice 123a; and/or the cross-sectional shape of the second transmission member 1322 is adapted to the shape of the second fluid conducting orifice 124b. For example, if the cross-sectional shape of the first transmission member 1312 and the shape of the first fluid conducting orifice 123a are both circles, the radius of the end of the first transmission member 1312 facing the first fluid conducting orifice 123a gradually decreases in the direction away from the first driving portion 1311. Of course, it may also be set as ellipses, squares and the like. In this case, a slope 130 is formed at the end of the first transmission member 1312 and/or the end of the second transmission member 1322, and the first transmission member 1312 and/or the second transmission member 1322 move(s) in the thickness direction of the valve body 12 to adjust the distance between the slope 130 of the first transmission member 1312 and the first fluid conducting orifice 123a, and/or adjust the distance between the slope 130 of the second transmission member 1322 and the second fluid conducting orifice 124b to control the gap between the first adjusting member 131 and the first fluid conducting orifice 123a, and/or control the gap between the second adjusting member 132 and the second fluid conducting orifice 124b to achieve the adjustment of the flow rate.

In some embodiments, as shown in FIG. 14 to FIG. 15, the first transmission member 1312 is movably arranged on the valve body 12 and at least partially located in the first valve channel; and/or the second transmission member 1322 is movably arranged on the valve body 12 and at least partially located in the second valve channel.

The first transmission member 1312 can pass through a side wall of the valve body 12 to enter the inside of the first valve channel. An end of the first transmission member 1312 away from the first driving portion 1311 is provided with a first sealing portion 1313. A gap between the first sealing portion 1313 and the first fluid conducting orifice 123a is adjusted by the movement of the first transmission member 1312 to achieve the adjustment of the flow rate of the first fluid conducting orifice 123a. The slope 130 is formed on the first sealing portion 1313.

The second transmission member 1322 can pass through a side wall of the valve body 12 to enter the inside of the second valve channel. An end of the second transmission member 1322 away from the second driving portion 1321 is provided with a second sealing portion 1323. A gap between the second sealing portion 1323 and the second fluid conducting orifice 124b is adjusted by the movement of the second transmission member 1322 to achieve the adjustment of the flow rate of the second fluid conducting orifice 124b. The slope 130 is formed on the second sealing portion 1323.

In some embodiments, as shown in FIG. 14 to FIG. 15, a first side wall 121 and a second side wall 122 away from each other are formed on the valve body 12. A first through hole 121a and a second through hole 121b which are suitable for the first transmission member 1312 and the second transmission member 1322 to pass through are respectively formed in the first side wall 121. The first fluid conducting orifices 123a and the second fluid conducting orifices 124b are formed on the second side wall 122, the first fluid conducting orifices 123a communicate with the first sub-channels 123, and the second fluid conducting orifices 124b communicate with the second sub-channels 124. Specifically, the first transmission member 1312 can move in a direction from the first side wall 121 to the second side wall 122 to control the opening degree of the first sub-channel 123 by adjusting the distance between the first sealing portion 1313 and the first fluid conducting orifice 123a, thereby adjusting the flow rate of the medium entering the flow channel inlet 11a from the first fluid conducting orifice 123a. The second transmission member 1322 can also move in the direction from the first side wall 121 to the second side wall 122 to control the opening degree of the second sub-channel 124 by adjusting the distance between the second sealing portion 1323 and the second fluid conducting orifice 124b, thereby adjusting the flow rate of the medium entering the second fluid conducting orifice 124b from the flow channel outlet 11b. The working principle of the valve assembly 100 is simple and easy to implement.

In some embodiments, as shown in FIG. 14 to FIG. 15, the first driving portion 1311 is arranged on the first side wall 121 and is suitable for driving the first transmission member 1312 to move between the first through hole 121a and the first fluid conducting orifice 123a to adjust the gap between the first sealing portion 1313 and the first fluid conducting orifice 123a, so as to achieve the adjustment and control of the opening degree of the first fluid conducting orifice 123a, thereby adjusting the flow rate of the medium entering the flow channel inlet 11a from the first fluid conducting orifice 123a. The second driving portion 1321 is arranged on the first side wall 121 and is suitable for driving the second transmission member 1322 to move between the second through hole 121b and the second fluid conducting orifice 124b to adjust the gap between the second sealing portion 1323 and the second fluid conducting orifice 124b, so as to achieve the adjustment and control of the opening degree of the second fluid conducting orifice 124b, thereby adjusting the flow rate of the medium entering the second fluid conducting orifice 124b from the flow channel outlet 11b.

The temperature adjusting apparatus according to the present disclosure is briefly described below.

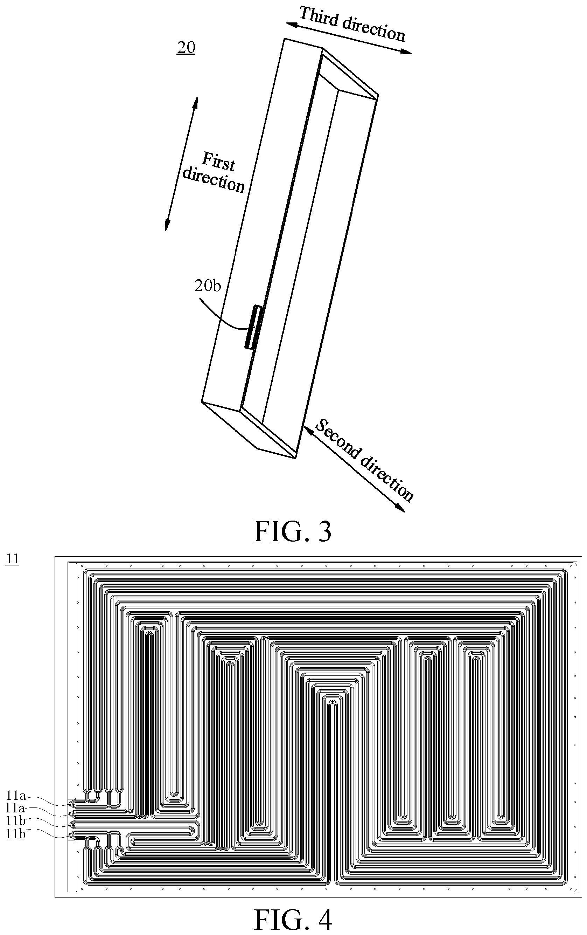

As shown in FIG. 4 to FIG. 15, the temperature adjusting apparatus according to the present disclosure includes: a temperature adjusting member 11 and a valve assembly 100. A flow channel is formed in the temperature adjusting member 11, and the flow channel is provided with a flow channel inlet 11a and a flow channel outlet 11b. The valve assembly 100 is arranged on the temperature adjusting member 11. The valve assembly 100 is constructed as the valve assembly 100 according to any one of the above embodiments. The first fluid conducting orifice 123a communicates with the flow channel inlet 11a, and the second fluid conducting orifice 124b communicates with the flow channel outlet 11b. Specifically, the temperature adjusting member 11 is suitable for being in direct or indirect contact with other structures to exchange heat with other structures. A heat exchange medium flows in the flow channel of the temperature adjusting member 11. The heat exchange medium generally flows into the flow channel from the flow channel inlet 11a, and then flows out of the flow channel from the flow channel outlet 11b. The valve assembly 100 is arranged at the flow channel inlet 11a and the flow channel outlet 11b to control the state and flow rate of the heat exchange medium flowing into the flow channel inlet 11a and flowing out of the flow channel outlet 11b, thereby accurately controlling the heat exchange medium flowing through the temperature adjusting member 11, and improving the heat exchange effect of the temperature adjusting member 11. The temperature adjusting apparatus can achieve automatic adjustment according to actual needs to ensure that the temperature adjusting effect of the temperature adjusting member 11 is always in the best state.

According to some embodiments of the present disclosure, as shown in FIG. 4, multiple flow channels are provided. Multiple first fluid conducting orifices 123a and second fluid conducting orifices 124b are provided. The first fluid conducting orifice 123a communicates with the corresponding flow channel inlet 11a, and the second fluid conducting orifice 124b communicates with the corresponding flow channel outlet 11b. The adjusting component is configured to adjust flow rates of the multiple first fluid conducting orifices and the multiple second fluid conducting orifices. Specifically, one flow channel can communicate with one first fluid conducting orifice 123a and one second fluid conducting orifice 124b respectively, and multiple flow channels can communicate with multiple first fluid conducting orifices 123a and multiple second fluid conducting orifices 124b respectively. The valve assembly 100 can control the flow rates of any first fluid conducting orifice 123a and any second fluid conducting orifice 124b according to actual needs to meet the temperature adjusting needs of the temperature adjusting apparatus, thereby achieving intelligent adjustment and control of the temperature.

According to some embodiments of the present disclosure, the adjusting component includes multiple first adjusting members and multiple second adjusting members. The first adjusting member is configured to adjust the flow rate of the corresponding first fluid conducting orifice, and the second adjusting member is configured to adjust the flow rate of the corresponding second fluid conducting orifice.

According to some embodiments of the present disclosure, as shown in FIG. 4 to FIG. 9, the temperature adjusting member 11 is formed with a first flow channel 111 and a second flow channel 112. The first flow channel 111 is arranged around the periphery of the second flow channel 112. The first flow channel 111 is configured to exchange heat with a first temperature region of a battery module, and the second flow channel 112 is configured to exchange heat with a second temperature region of the battery module. In some embodiments, the second flow channel 112 may be located at a middle part of the temperature adjusting member 11, and the first flow channel 111 is located at an edge of the temperature adjusting member 11. The flow rates of the first flow channel 111 and the second flow channel 112 may be respectively controlled by the valve assembly, thereby achieving the adjustment and control of the temperature of each region of the temperature adjusting member 11. Multiple first flow channels and/or multiple second flow channels may be provided according to actual needs.

In some embodiments, as shown in FIG. 4, the first flow channel 111 and the second flow channel 112 are matched to cover a side surface of the temperature adjusting member 11, so that the temperature adjusting member 11 can exchange heat with other structures through the side surface or another surface directly opposite to the side surface in the thickness direction.

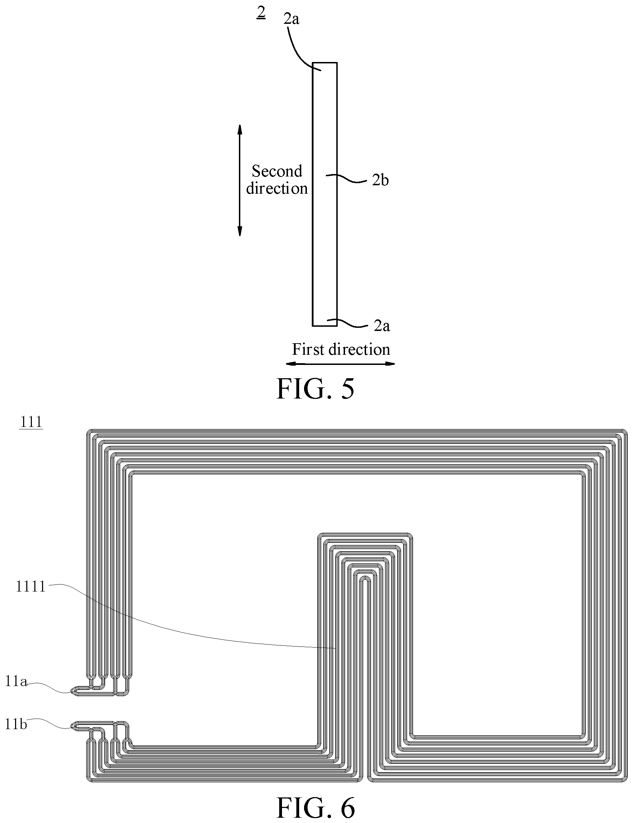

According to some embodiments of the present disclosure, as shown in FIG. 6 to FIG. 9, the first flow channel 111 is formed with a protrusion portion 1111 protruding towards the inside of the second flow channel 112. The protrusion portion 1111 can increase the length of the first flow channel 111 to prolong the flow time of the medium in the first flow channel 111, thereby enhancing the heat exchange effect of the first flow channel 111. The second flow channel 112 is formed with a notch portion 1121 matched with the protrusion portion 1111, and the notch portion 1121 can also increase the length of the second flow channel 112 to prolong the flow time of the medium in the second flow channel 112, thereby enhancing the heat exchange effect of the second flow channel 112.

According to some embodiments of the present disclosure, as shown in FIG. 6 to FIG. 9, the first flow channel 111 includes multiple first sub-flow channels connected in parallel with each other, and the second flow channel 112 includes multiple second sub-flow channels connected in parallel with each other. The valve assembly 100 respectively communicates with the flow channel inlets 11a and the flow channel outlets 11b of multiple first flow channels 111, and the valve assembly 100 also respectively communicates with the flow channel inlets 11a and the flow channel outlets 11b of multiple second flow channels 112. In this case, the multiple first flow channels 111 and the multiple second flow channels 112 do not communicate with each other, so that the valve assembly 100 can intelligently adjust and control the flow rates in each first flow channel 111 and each second flow channel 112 according to temperature adjusting needs.

In some embodiments, as shown in FIG. 12, first sub-channels 123 communicating with the main inlet 12a and second sub-channels 124 communicating with the main outlet 12b are formed in the valve body 12. The first sub-channel 123 is provided with a first sub-valve port 123c and a second sub-valve port 123d, and the second sub-channel 124 is provided with a third sub-valve port 124c and a fourth sub-valve port 124d. The first sub-valve port 123c and the fourth sub-valve port 124d respectively communicate with the flow channel inlet 11a and the flow channel outlet 11b of the first flow channel 111. The second sub-valve port 123d and the third sub-valve port 124c respectively communicate with the flow channel inlet 11a and the flow channel outlet 11b of the second flow channel 112. The second sub-valve port 123d and the third sub-valve port 124c are arranged between the first sub-valve port 123c and the fourth sub-valve port 124d. In some embodiments, two first sub-channels 123 may be provided. The two first sub-channels 123 communicate with the first flow channel 111 and the second flow channel 112 respectively through the first sub-valve port 123c and the second sub-valve port 123d. Two second sub-channels 124 may be provided. The two second sub-channels 124 communicate with the second flow channel 112 and the first flow channel 111 respectively through the third sub-valve port 124c and the fourth sub-valve port 124d.

Specifically, the first sub-valve port 123c of one of the first sub-channels 123 communicates with the flow channel inlet 11a of the first flow channel 111, and the fourth sub-valve port 124d of one of the second sub-channels 124 communicates with the flow channel outlet 11b of the first flow channel 111. In this case, the medium flows out of the first sub-channel 123 from the first sub-valve port 123c and flows into the first flow channel 111 from the flow channel inlet 11a, and then may flow out of the first flow channel 111 from the flow channel outlet 11b and flow into the second sub-channel 124 from the fourth sub-valve port 124d. The second sub-valve port 123d of another first sub-channel 123 communicates with the flow channel inlet 11a of the second flow channel 112, and the third sub-valve port 124c of another second sub-channel 124 communicates with the flow channel outlet 11b of the second flow channel 112. In this case, the medium flows out of the first sub-channel 123 from the second sub-valve port 123d and flows into the second flow channel 112 from the flow channel inlet 11a, and then may flow out of the second flow channel 112 from the flow channel outlet 11b and flow into the second sub-channel 124 from the third sub-valve port 124c.

In some embodiments, one first flow channel 111 may be provided. The first flow channel 111 may be provided with multiple branch flow channels. The medium entering the first flow channel 111 from the flow channel inlet 11a is diverted to the branch flow channels and finally converges to the flow channel outlet 11b. One second flow channel 112 may be provided. The second flow channel 112 may also be provided with multiple branch flow channels. The medium entering the second flow channel 112 from the flow channel inlet 11a is diverted to the branch flow channels and finally converges to the flow channel outlet 11b.

In some embodiments, the flow rates of the flow channel inlet 11a and the flow channel outlet 11b of the first flow channel 111 are respectively controlled by the first adjusting member 131 and the second adjusting member 132; and the flow rates of the flow channel inlet 11a and the flow channel outlet 11b of the second flow channel 112 are respectively controlled by the first adjusting member 131 and the second adjusting member 132.

In some embodiments, two first sub-channels 123 corresponding to the first flow channel 111 and the second flow channel 112 are respectively provided with a first adjusting member 131 inside, and two second sub-channels 124 corresponding to the first flow channel 111 and the second flow channel 112 are respectively provided with a second adjusting member 132 inside. The four adjusting members are integrated on the valve body 12 to form the valve assembly 100 as shown in FIG. 11. The valve assembly 100 can control the flow rates of the flow channel inlets 11a and the flow channel outlets 11b of the two flow channels.

According to the temperature adjusting needs of the temperature adjusting apparatus, the temperature adjusting apparatus has four working modes: two first sub-channels 123 and two second sub-channels 124 are all opened; two first sub-channels 123 and two second sub-channels 124 are all closed; the first sub-channel 123 and second sub-channel 124 corresponding to the first flow channel 111 are opened, and the first sub-channel 123 and second sub-channel 124 corresponding to the second flow channel 112 are closed; and the first sub-channel 123 and second sub-channel 124 corresponding to the second flow channel 112 are opened, and the first sub-channel 123 and second sub-channel 124 corresponding to the first flow channel 111 are closed.

When the temperature adjusting member 11 has a local temperature adjusting need, the first adjusting member 131 and/or the second adjusting member 132 corresponding to the flow channel at the corresponding position can be independently controlled to control the flow rate of the flow channel, thereby increasing or reducing the temperature of the flow channel to meet the temperature adjusting need of the temperature adjusting member 11. Furthermore, when the local temperature adjusting need is not high, the first sub-channel 123 or the second sub-channel 124 of the corresponding flow channel can be opened only to reduce energy consumption.

A battery tray 1 according to the present disclosure is briefly described below.

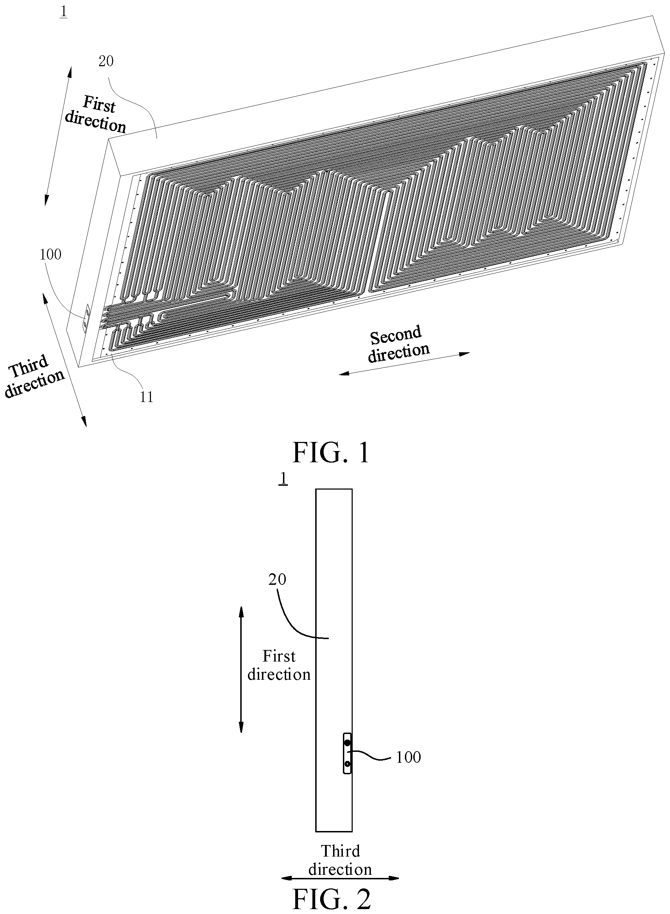

As shown in FIG. 1 to FIG. 3, the battery tray 1 according to the present disclosure includes: a temperature adjusting apparatus and a side plate 20. The temperature adjusting apparatus is constructed as the temperature adjusting apparatus according to any one of the above embodiments. The side plate 20 is arranged on the periphery of the temperature adjusting member 11, and an accommodating cavity suitable for accommodating the battery module is defined between the side plate 20 and the temperature adjusting member 11. The valve assembly 100 is at least partially arranged in the accommodating cavity. In this case, the temperature adjusting member 11 is constructed as a heat exchange plate arranged on the battery tray 1. The valve assembly 100 communicates with the flow channel inlet 11a and the flow channel outlet 11b of the temperature adjusting member 11. The valve assembly 100 may be arranged inside the accommodating cavity or outside the accommodating cavity, and the valve assembly 100 may also be completely embedded in the side plate 20 or partially embedded in the side plate 20, which is not limited here. Because the battery tray 1 according to the present disclosure is provided with the temperature adjusting apparatus in the above embodiments, the battery tray 1 can efficiently control the temperature of the battery 2.

In some embodiments, the valve assembly 100 can be fixed to the temperature adjusting member 11 through a fastener.

According to some embodiments of the present disclosure, as shown in FIG. 3, a receiving space 20b is formed on the side plate 20, and the valve body 12 is at least partially received in the receiving space 20b. The valve assembly 100 may be completely embedded in the receiving space 20b of the side plate 20 or partially embedded in the receiving space 20b of the side plate 20. In this case, the valve assembly 100 is fixed to the side plate 20. In some embodiments, the receiving space 20b is constructed as a hole penetrating through the side plate 20 in the thickness direction. A main inlet 12a and a main outlet 12b are formed on a side surface of the valve body 12 away from the accommodating cavity, so that the temperature adjusting apparatus communicates with an external structure through the main inlet 12a and the main outlet 12b. The valve assembly 100 diverts the medium flowing in from the main inlet 12a into multiple flow channels, and the media from the multiple flow channels can converge to the main outlet 12b and flow out of the valve assembly 100, thereby reducing the number of arrangement of flow channel inlets and outlets on the battery tray 1, increasing the integration level of the battery tray 1, and simplifying the structure of the battery tray 1. Moreover, most structures of the valve assembly 100 are located inside the battery tray 1, so that the thermal resistance between the medium and the flow channel can be reduced, the medium can more quickly cool the battery 2, and the working efficiency of the entire temperature adjusting apparatus can be improved.

A battery pack according to the present disclosure is briefly described below.

The battery pack according to the present disclosure includes: a battery module and a temperature adjusting apparatus or a battery tray 1. The temperature adjusting apparatus is constructed as the temperature adjusting apparatus according to any one of the above embodiments. The battery tray 1 is constructed as the battery tray 1 according to any one of the above embodiments. The battery module includes at least one battery, and the temperature adjusting apparatus is configured to exchange heat for the battery module. In some embodiments, the battery module is attached to a side surface of the temperature adjusting member 11, and the side surface of the temperature adjusting member 11 may be provided with multiple flow channels, so that the battery module 2 can exchange heat with the temperature adjusting member 11. Because the battery pack according to the present disclosure is provided with the temperature adjusting apparatus in the above embodiments, the battery pack can accurately control the state and flow rate of a heat exchange medium in each flow channel to improve the temperature adjusting effect at various locations of the battery pack.

According to some embodiments of the present disclosure, the battery module has a first temperature region and a second temperature region. A first flow channel of the temperature adjusting member is configured to exchange heat for the first temperature region of the battery module, and a second flow channel of the temperature adjusting member is configured to exchange heat for the second temperature region of the battery module.

According to some embodiments of the present disclosure, as shown in FIG. 5 to FIG. 9, the battery module includes multiple batteries 2 arranged along a first direction and extending along a second direction, and at least one end of each battery 2 is provided with an electrode lead-out terminal 2a (such as a terminal). The temperature adjusting member 11 is arranged on one side of the battery module along a third direction. The first temperature region is a region of the battery module close to the electrode lead-out terminal. The second flow channel 112 of the temperature adjusting member 11 is arranged on one side of the first flow channel 111 away from the electrode lead-out terminal 2a. In some embodiments, as shown in FIG. 5, a single battery 2 of the battery module is provided with the electrode lead-out terminals 2a at both ends and provided with a battery middle section 2b. A first flow channel 111 corresponding to the electrode lead-out terminal 2a and performing heat exchange and a second flow channel 112 corresponding to the battery middle section 2b and performing heat exchange are formed on the temperature adjusting member 11. The flow channel in the first temperature region and the flow channel in the second temperature region are independently controlled. The temperature of the flow channel in the first temperature region can be adjusted and controlled by adjusting and controlling the state and flow rate of the medium in the flow channel in the first temperature region, and the temperature of the flow channel in the second temperature region can be adjusted and controlled by adjusting and controlling the state and flow rate of the medium in the flow channel in the second temperature region, thereby adjusting and controlling the temperature of the battery middle section 2b.

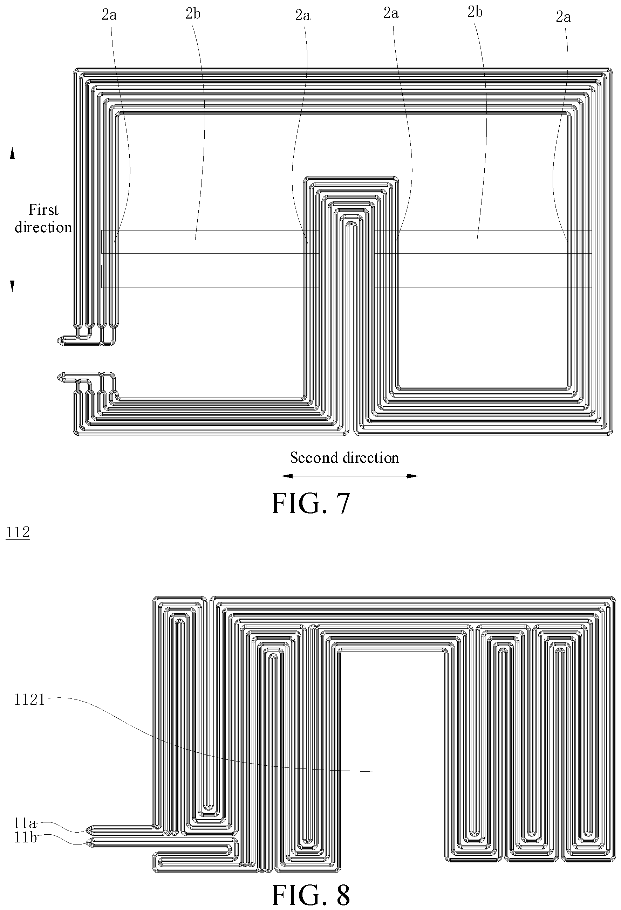

In some embodiments, the battery pack includes two battery modules. The batteries 2 in each battery module are arranged along a first direction and extend along a second direction. The two battery modules are arranged spaced away in the second direction. As shown in FIG. 7, the protrusion portion 1111 of the first flow channel 111 corresponds to the electrode lead-out terminals 2a of the two battery modules. As shown in FIG. 9, the notch portion 1121 of the second flow channel 112 also corresponds to the electrode lead-out terminals 2a of the two battery modules.

A power consuming device according to the present disclosure is briefly described below. Here, the power consuming device mainly refers to a device that requires thermal management, such as an electric vehicle or a portable power source.

The power consuming device according to the present disclosure includes the battery pack in the above embodiments. Because the power consuming device according to the present disclosure is provided with the battery pack in the above embodiments, the power consuming device has better safety.

In the descriptions of this specification, the description of a reference term such as "an embodiment", "some embodiments", "an example", "a specific example", or "some examples" means that a specific feature, structure, material, or characteristic that is described with reference to the embodiment or the example is included in at least one embodiment or example of the present disclosure. In this specification, schematic descriptions of the above terms are not necessarily directed at the same embodiment or example. In addition, the described specific features, structures, materials, or characteristics may be combined in a proper manner in any one or more of the embodiments or examples. In addition, a person skilled in the art may combine different embodiments or examples described in this specification.

Although the embodiments of the present disclosure have been shown and described above, changes, modifications, substitutions, and variations can be made to the above embodiments.

## Claims

1. A valve assembly, comprising:
a valve body, the valve body being provided with a first fluid conducting orifice and a second fluid conducting orifice, the first fluid conducting orifice being configured to communicate a flow channel inlet of a temperature adjusting member with an outside, and the second fluid conducting orifice being configured to communicate a flow channel outlet of the temperature adjusting member with the outside; and
an adjusting component, the adjusting component being arranged on the valve body and the adjusting component being configured to adjust a flow rate of the first fluid conducting orifice and a flow rate of the second fluid conducting orifice.

2. The valve assembly according to claim 1, wherein the adjusting component comprises a first adjusting member and a second adjusting member, the first adjusting member is configured to adjust the flow rate of the first fluid conducting orifice, and the second adjusting member is configured to adjust the flow rate of the second fluid conducting orifice.

3. The valve assembly according to claim 2, wherein the valve body is provided with a main inlet and a main outlet for communicating with the outside, a first valve channel and a second valve channel are arranged spaced away in the valve body, the first fluid conducting orifice communicates with the main inlet through the first valve channel, and the second fluid conducting orifice communicates with the main outlet through the second valve channel.

4. The valve assembly according to claim 3, wherein the first valve channel comprises: a first main channel and a plurality of first sub-channels communicating with the first main channel, a plurality of first fluid conducting orifices and a plurality of first adjusting members are provided, the first fluid conducting orifice is configured to communicate with the corresponding flow channel inlet of the temperature adjusting member, the first fluid conducting orifice communicates with the first main channel through the corresponding first sub-channel, and the first adjusting member is configured to adjust the flow rate of the corresponding first fluid conducting orifice; and/or
the second valve channel comprises: a second main channel and a plurality of second sub-channels communicating with the second main channel, a plurality of second fluid conducting orifices and a plurality of second adjusting members are provided, the second fluid conducting orifice is configured to communicate with the corresponding flow channel outlet of the temperature adjusting member, the second fluid conducting orifice communicates with the second main channel through the corresponding second sub-channel, and the second adjusting member is configured to adjust the flow rate of the corresponding second fluid conducting orifice, preferably
wherein the plurality of first fluid conducting orifices and the plurality of first adjusting members are provided, the plurality of second fluid conducting orifices and the plurality of second adjusting members are provided, the plurality of first fluid conducting orifices and the plurality of second fluid conducting orifices are located on one side of the valve body, and the plurality of first fluid conducting orifices form a first fluid conducting orifice group; the plurality of first adjusting members and the plurality of second adjusting members are located on another side of the valve body, and the plurality of second fluid conducting orifices form a second fluid conducting orifice group; and the plurality of first fluid conducting orifices in the first fluid conducting orifice group are arranged spaced away along a width direction of the valve body, the plurality of first fluid conducting orifices in the second fluid conducting orifice group are arranged spaced away along the width direction of the valve body, and the second fluid conducting orifice group is located on one side of the first fluid conducting orifice group along the width direction of the valve body, and more preferably
wherein the main inlet and the main outlet are arranged at a same end of the valve body.

5. The valve assembly according to claim 3, wherein the first adjusting member is configured to adjust an opening area of the first fluid conducting orifice, and/or the second adjusting member is configured to adjust an opening area of the second fluid conducting orifice.

6. The valve assembly according to claim 5, wherein a main inlet channel communicating with the main inlet is formed on the valve body, and a plurality of first valve channels are provided and the plurality of first valve channels respectively communicate with the main inlet channel; and
a main outlet channel communicating with the main outlet is formed on the valve body, and a plurality of second valve channels are provided and the plurality of second valve channels respectively communicate with the main outlet channel.

7. The valve assembly according to claim 6, wherein the first adjusting member comprises:
a first driving portion, the first driving portion being arranged on the valve body; and
a first transmission member, the first transmission member being connected with the first driving portion, and the first driving portion being configured to drive the first transmission member to move so as to enable the first transmission member to be close to or away from the first fluid conducting orifice; and/or
the second adjusting member comprises:
a second driving portion, the second driving portion being arranged on the valve body; and
a second transmission member, the second transmission member being connected with the second driving portion, and the second driving portion being configured to drive the second transmission member to move so as to enable the second transmission member to be close to or away from the second fluid conducting orifice.

8. The valve assembly according to claim 7, wherein a size of an end of the first transmission member facing the first fluid conducting orifice gradually decreases in a direction away from the first driving portion; and/or
a size of an end of the second transmission member facing the second fluid conducting orifice gradually decreases in a direction away from the second driving portion; or
wherein the first transmission member is movably arranged on the valve body and at least partially located in the first valve channel; and/or the second transmission member is movably arranged on the valve body and at least partially located in the second valve channel.

9. A temperature adjusting apparatus, comprising:
a temperature adjusting member, a flow channel being formed in the temperature adjusting member, and the flow channel being provided with a flow channel inlet and a flow channel outlet; and
a valve assembly, the valve assembly being arranged on the temperature adjusting member, the valve assembly being constructed as the valve assembly according to any one of claims 1 to 8, the first fluid conducting orifice communicating with the flow channel inlet, and the second fluid conducting orifice communicating with the flow channel outlet.

10. The temperature adjusting apparatus according to claim 9, wherein a plurality of flow channels are provided;
a plurality of first fluid conducting orifices and a plurality of second fluid conducting orifices are provided, the first fluid conducting orifice communicates with the corresponding flow channel inlet, and the second fluid conducting orifice communicates with the corresponding flow channel outlet; and
the adjusting component is configured to adjust flow rates of the plurality of first fluid conducting orifices and the plurality of second fluid conducting orifices.

11. The temperature adjusting apparatus according to claim 10, wherein the adjusting component comprises a plurality of first adjusting members and a plurality of second adjusting members, the first adjusting member being configured to adjust the flow rate of the corresponding first fluid conducting orifice, and the second adjusting member being configured to adjust the flow rate of the corresponding second fluid conducting orifice.

12. The temperature adjusting apparatus according to claim 11, wherein the temperature adjusting member is formed with a first flow channel and a second flow channel, the first flow channel being arranged around a periphery of the second flow channel, the first flow channel being configured to exchange heat with a first temperature region of a battery module, and the second flow channel being configured to exchange heat with a second temperature region of the battery module, preferably
wherein the first flow channel is formed with a protrusion portion protruding towards an inside of the second flow channel, and the second flow channel is formed with a notch portion matched with the protrusion portion, and more preferably
wherein the first flow channel comprises a plurality of first sub-flow channels connected in parallel with each other, and the second flow channel comprises a plurality of second sub-flow channels connected in parallel with each other.

13. A battery tray, comprising:
a temperature adjusting apparatus, the temperature adjusting apparatus being constructed as the temperature adjusting apparatus according to any one of claims 9 to 12; and
a side plate, the side plate being arranged on a periphery of the temperature adjusting member, an accommodating cavity suitable for accommodating a battery module being defined between the side plate and the temperature adjusting member, and a valve assembly being at least partially arranged in the accommodating cavity, preferably
wherein a receiving space is formed on the side plate, and the valve body is at least partially received in the receiving space.

14. A battery pack, comprising the temperature adjusting apparatus according to any one of claims 9 to 12, or the battery tray according to claim 13; and
a battery module, comprising at least one battery, and the temperature adjusting apparatus being configured to exchange heat for the battery module, preferably
wherein the battery module has a first temperature region and a second temperature region, a first flow channel of the temperature adjusting member is configured to exchange heat for the first temperature region of the battery module, and a second flow channel of the temperature adjusting member is configured to exchange heat for the second temperature region of the battery module, and more preferably.
wherein the battery module comprises a plurality of batteries arranged along a first direction and extending along a second direction, at least one end of each battery is provided with an electrode lead-out terminal, the temperature adjusting member is arranged on one side of the battery module along a third direction, the first temperature region is a region of the battery module close to the electrode lead-out terminal, and the second flow channel of the temperature adjusting member is arranged on one side of the first flow channel away from the electrode lead-out terminal.

15. A power consuming device, comprising the battery pack according to claim 14.
